# EUROPEAN PATENT APPLICATION

(11) **EP 3 282 137 A1**
(43) Date of publication of application: **14.02.2018**
(21) Application number: 17185229.6
(22) Date of filing: 08.08.2017
(51) Int. Cl.: F16B 37/14, B60B 3/16, F16B 11/00

(54) **FASTENING ELEMENT INTENDED FOR VEHICLE WHEELS AND PROVIDED WITH A PROTECTIVE CAP**

(30) Priority: 11.08.2016 IT 201600084808
(71) Applicant: Groppo, Lazzaro, 12040 Sanfre' (CN) (IT); Groppo, Matteo, 12040 Sanfre (CN) (IT)
(72) Inventor: Groppo, Lazzaro, 12040 Sanfre' (CN) (IT); Groppo, Matteo, 12040 Sanfre (CN) (IT)
(74) Representative: Robba, Pierpaolo

(57) **Abstract**

Fastening element (11) intended for vehicle wheels and provided with a protective cap, comprising: a cylindrical body (13), an engaging portion (15) for a tool, an annular flange (17) radially extending about said cylindrical body, and a threaded hole (20), when said fastening element is made as a nut, or a threaded shaft (19), when said fastening element (11) is made as a bolt, both said hole and said shaft axially extending about a longitudinal axis; a cap (23) covering the engaging portion and the annular flange; wherein said cap (23) is glued to the cylindrical body (13) and/or comprises an end (31) bent about an annular flange (33) of said ferrule (25), if any, whereby the cap (23) is held firmly associated with the cylindrical body (13) and does not cooperate to hold the ferrule (25), if any, attached to the body of the fastening element.

## Description

### Technical Field

The invention relates to a fastening element intended for vehicle wheels and provided with a protective cap. The fastening element according to the invention can be made as a nut or a bolt.

### Prior Art

Fastening elements intended for vehicle wheels and made as nuts or bolts are known in the art. Such fastening elements generally have a cylindrical body provided with either a threaded longitudinal hole, when they are made as nuts, or a threaded longitudinal shaft, when they are made as bolts. The hole may be a through hole or a blind hole, depending on the applications.

Always in accordance with the prior art, the cylindrical body is further provided with an engaging portion or head for a tool or an actuating spanner, allowing rotating the fastening element about its longitudinal axis. The engaging portion generally has a hexagonal cross-section and thus it can be engaged by a standard fixed spanner with hexagonal cross-section. The spanner can be possibly applied to a screwing device, e.g. of pneumatic type. When the fastening element is in use, i.e. it is engaged into a threaded stud or a threaded seat depending on whether the element is a nut or a bolt, respectively, the engaging portion generally remains visible from the outside, since it must be accessible to the actuating spanner. For instance, when the nut or bolt is engaged in a hub of a vehicle wheel, the engaging portion remains visible outside the wheel rim.

In some applications, for instance in the automotive field, the need exists to make the engaging portion of the fastening element aesthetically pleasant. This result may be achieved by treatments of different kinds applied either to the whole body of the fastening element, or only to the portion remaining visible from the outside. For instance, the engaging portion of the element, when made of steel, may undergo a chromium-plating treatment. In the alternative, the engaging portion may be painted. In a further alternative, the engaging portion may be covered with a metallic or plastic material. In the latter case, the covering may either be adherent to the external surface of the engaging portion, or consist of a hollow cap press-fitted onto the engaging portion. In some cases, it is also known to apply, between the cap and the engaging portion, a hardening adhesive significantly improving the mutual fastening of both components. The fastening of the cap onto the engaging portion must actually be such that, when a rotation torque is applied to the fastening element by means of the actuating spanner, it prevents the cap from being detached from the body of the engaging portion because of the applied torque. JPS5010968 and GB 2378740 disclose fastening elements equipped with a cap of the kind disclosed. According to the prior art, the cap may be made of different materials, such as for instance aluminium or chromium-plated steel.

Said fastening elements provided with a protective cap according to the prior art have however drawbacks and operation limits.

One of the problems encountered in manufacturing a fastening element provided with a cap is how to firmly fasten the cap to the body of the fastening element.

The prior art fastening elements intended for vehicle wheels may further include a ferrule rotatably associated with the cylindrical body of the fastening element. Generally, the ferrule is idly rotatable about the longitudinal axis of the body of the fastening element.

One of the problems to be solved in designing a fastening element equipped with a rotatable ferrule is how to prevent the ferrule from being detached from the body of the fastening element, while however preserving its capability of idly rotating about the body.

It is an object of the invention to solve the above problem.

According to the prior art, the ferrule is held firmly associated with the fastening element thanks to the cap.

Examples of fastening elements equipped with a rotatable ferrule of the above kind are disclosed in US 5,772,377 and US 6,592,314.

The solution providing for keeping the ferrule associated with the body thanks to the cap has however a number of drawbacks. A first drawback is the fragility of the assembly because of the limited thickness of the cap wall. Thus, the cap can be easily deformed while the fastening element is being used, especially when the element is tightly screwed, and consequently the ferrule can detach itself from the body. Another drawback results from the manufacturing complexity, since the cap is to be bent at its base in order to retain the ferrule, and such an operation is to be carefully and precisely carried out in order to preserve the capability of idle rotation of the ferrule about the body of the fastening element. Moreover, such an operation unavoidably results in the creation of axial clearances, which are hard to eliminate.

It is an object of the present invention to overcome the limits described above.

More particularly, it is an object of the invention to provide a fastening element, equipped with a cap and a rotatable ferrule, which is free from the drawbacks of the prior art. It is another object of the invention to provide an element of the above kind, which can be made as a nut or a bolt. It is a further object of the invention to provide a fastening element that is aesthetically pleasant and that preserves its aesthetical features even after a heavy use. It is a further, but not the last object of the invention to provide a nut or a bolt that can be industrially manufactured at favourable costs.

The above and still further objects are achieved by the fastening element intended for vehicle wheels and provided with a protective cap according to the present invention, as claimed in the appended claims.

### Description of the invention

The fastening element according to the invention can be made as a nut or a bolt and, moreover, in both cases, it may include or not a ferrule idly rotatable relative to the body of the fastening element.

In accordance with an embodiment of the invention, the cap has an end bent about the rotatable ferrule. The rotatable ferrule is held onto the body of the fastening element by press-fitting, and the cap does not cooperate in keeping the ferrule attached to the body of the fastening element.

In accordance with an embodiment of the invention, the cap is glued to the body of the fastening element.

In accordance with an embodiment of the invention, the body of the fastening element is provided with recesses for the adhesive through which the cap is attached to the body of the fastening element.

According to the invention, the recesses are grooves or recesses having a rectangular or circular or oval cross-section, and they may have straight and/or curved sides. The recesses define corresponding seats for the adhesive and ensure the firm fastening of the cap onto the body of the fastening element.

When the adhesive is present, the cap may also possibly be not bent about the rotatable ferrule or about the flange of the body of the fastening element.

According to the invention, several combinations are possible, for instance: bolt/nut with rotatable ferrule and cap glued to the body of the bolt/nut and lacking the bent end, or having an end bent about the rotatable ferrule; or bolt/nut lacking the rotatable ferrule and cap glued to the head of the bolt/nut and lacking the bent end; or bolt/nut provided with a rotatable ferrule fastened to the body by press-fitting and cap, possibly glued to the head of the bolt/nut, held by the ferrule by bending the free end of the cap about an annular radial projection of the ferrule; or bolt/nut lacking the rotatable ferrule and cap glued to the head of the bolt/nut and provided with an end bent about a flange of the body of the bolt/nut. In all embodiments in which the cap is glued, the head or engaging portion of the bolt/nut will preferably be provided with at least one recess, groove or the like, in order to improve the holding action of the adhesive. Other combinations will be possible.

### Brief Description of the Figures

The constructional and functional features of the fastening element intended for vehicle wheels and provided with a protective cap according to the present invention will be better understood from the following detailed description, in which reference is made to the accompanying drawing sheets, which show preferred and non-limiting embodiments of the invention and in which:
- Fig. 1A is a longitudinal sectional view of a fastening element according to an embodiment of the invention, before the cap is applied;
- Fig. 1B is an enlarged view of a detail of Fig. 1A;
- Fig. 2A is a longitudinal sectional view of the fastening element shown in Fig. 1, after the cap has been applied;
- Fig. 2B is an enlarged view of a detail of Fig. 2A;
- Fig. 3A is a side view of a fastening element made as a bolt and having recesses for the adhesive, before the cap is applied;
- Fig. 3B is a longitudinal sectional view taken along plane B-B of Fig. 3A;
- Fig. 3C is a cross-sectional view taken along plane A-A of Fig. 3A;
- Fig. 4A is a side view of a fastening element made as a bolt and having recesses for the adhesive, before the cap is applied;
- Fig. 4B is a longitudinal sectional view taken along plane C-C of Fig. 4A;
- Fig. 4C is a cross-sectional view taken along plane B-B in Fig. 4A.

In all Figures, the same reference numerals have been used to denote equal or functionally equivalent components.

### Detailed description of some preferred embodiments

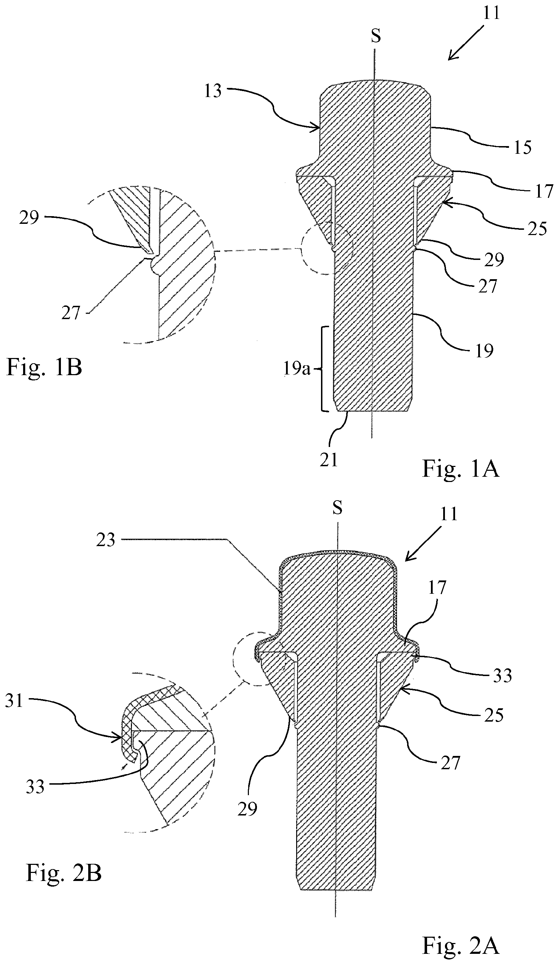

Referring to Figs. 1A, 1B, 2A, 2B, there is shown a fastening element 11 according to an embodiment of the invention. Element 11 includes a cylindrical body 13. A longitudinal axis "S", an engaging portion 15, an annular flange 17 radially extending about said cylindrical body 13 and a threaded shaft 19 axially extending about said longitudinal axis "S" are defined in body 13. Shaft 19 is further provided with a threaded portion 19a, which may extend over the whole shaft 19 or a part thereof

Engaging portion 15 is intended for engaging a tool (not shown) by which fastening element 11 is rotated about said axis "S" when element 11 is to be screwed of unscrewed.

Element 11 further includes a cap 23 covering engaging portion 15 of said cylindrical body 13 as well as annular flange 17.

Element 11 further includes a ferrule 25 idly rotatable relative to said cylindrical body 13. Ferrule 25 is rotatably associated about shaft 19. An annular edge 27 radially protruding from said shaft 19 and defined in a plane perpendicular to axis "S" prevents ferrule 25 from being detached from shaft 19. To this end, ferrule 25 is provided with an annular neck 29 which is radially caulked towards shaft 19 after ferrule 25 has been introduced into shaft 19. Neck 29 cooperates with annular edge 27 in order to prevent ferrule 25 from being detached from element 11.

Cap 23 has an end 31 which is bent about an annular flange 33 projecting radially outwards from ferrule 25 and defined at the base of ferrule 25 adjacent to flange 17.

The cooperation between bent end 31 of cap 23 and annular flange 33 prevents cap 23 from being slipped off the engaging portion 15. The cap covers portion 15 and the portion of annular flange 17 visible at the outside.

Moreover, cap 23 can be blocked onto element 11 by means of an adhesive interposed between the inner surface of cap 23 and the surface of portion 15 and/or of flange 17 of body 13.

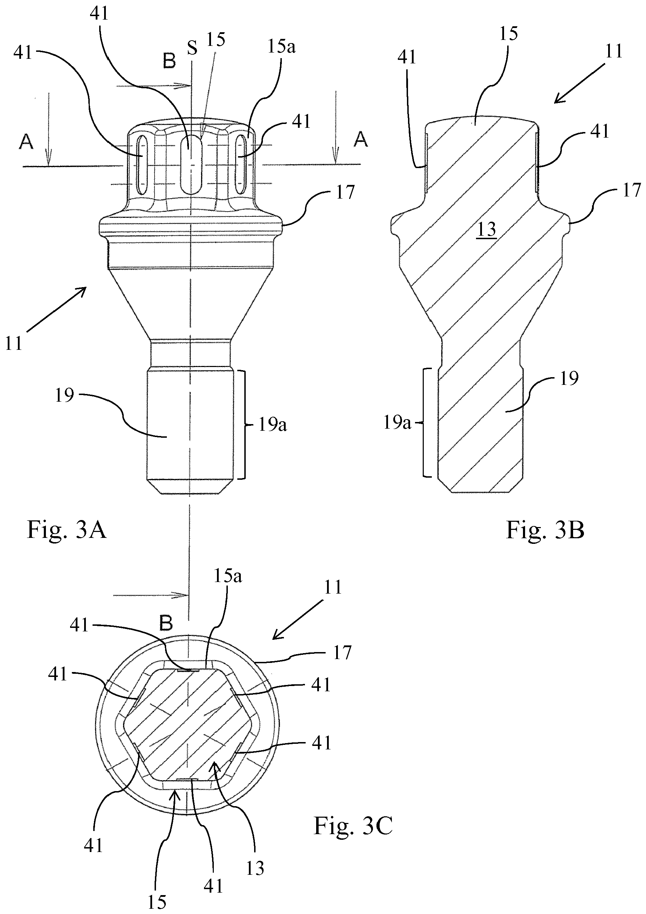

Referring to Figs. 3A, 3B, 3C, there is shown an element 11 having an engaging portion 15 provided with recesses 41 for an adhesive. Recesses 41 are formed on faces 15a of portion 15 that, in this embodiment, has a hexagonal cross-section. In this embodiment therefore six recesses 41 are provided on the whole. Recesses 41 aim at favouring fastening of cap 23 on portion 15. Actually, a certain amount of adhesive penetrates into recesses 41 and, once hardened, ensures the firm fastening of cap 23 onto portion 15.

In the illustrated embodiment, recesses 41 have a substantially rectangular shape, with two curved opposite walls. In other embodiments, recesses with different shapes, or simply grooves on the surface of portion 15, could be provided.

In this embodiment, element 11 is made as a bolt provided with a threaded shaft 19.

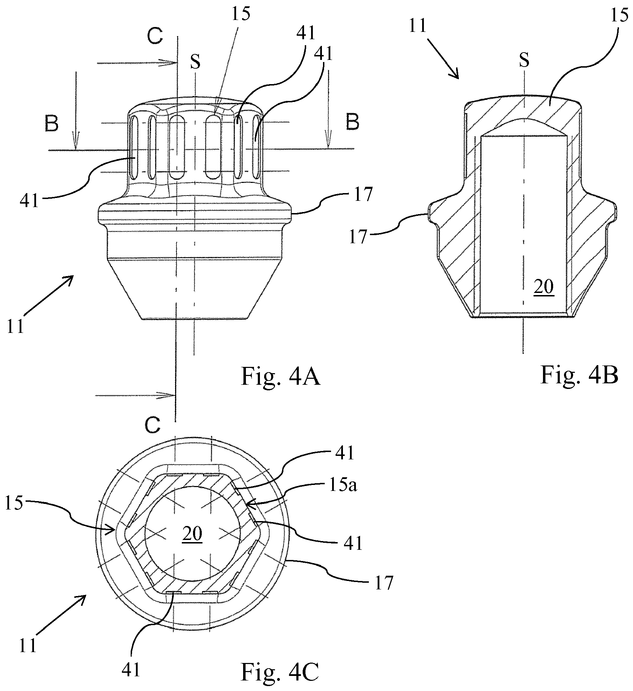

Referring to Figs. 4A, 4B, 4C, there is shown an embodiment similar to the previous one, in which however element 11 is made as a nut provided with a threaded hole 20 extending about axis "S" inside body 13. In this embodiment moreover recesses 41 are twice as many, since a pair of recesses 41 is provided for each face 15a of the hexagon of portion 15.

The fastening element as described and shown can undergo several variations and modifications, lying within the same inventive principle.

## Claims

1. Fastening element (11) intended for vehicle wheels and provided with a protective cap, comprising:
- a cylindrical body (13), in which there are defined a longitudinal axis ("S"), an engaging portion (15) for a tool, an annular flange (17) radially extending about said cylindrical body (13), and a threaded hole (20), when said fastening element (11) is made as a nut, or a threaded shaft (19), when said fastening element (11) is made as a bolt, both said hole and said shaft axially extending about said longitudinal axis ("S");
- a cap (23) covering the engaging portion (15) of the cylindrical body (13) and the annular flange (17);
- optionally, an idly rotatable ferrule (25) held by press-fitting on the cylindrical body (13);
**characterized in that** said cap (23) is glued to the cylindrical body (13) and/or comprises an end (31) bent about an annular flange (33) of said ferrule (25), if any, whereby the cap (23) is held firmly associated with the cylindrical body (13) and does not cooperate to hold the ferrule (25), if any, attached to the body of the fastening element.

2. Fastening element according to claim 1, wherein said ferrule (25) comprises an annular flange (33) protruding radially outwards from the ferrule (25) and defined at the base of the ferrule (25) adjacent to the flange (17), and wherein the end (31) of the cap (23) is bent about said annular flange (33), thus preventing the cap (23) from being slipped off the engaging portion (15).

3. Fastening element according to claim 2, wherein said ferrule (25) comprises an annular neck (29) radially caulked towards the shaft (19), when said fastening element (11) is made as a bolt.

4. Fastening element according to claim 3, wherein said shaft (19) comprises an annular edge (27) radially protruding about said shaft (19), whereby the cooperation by press-fitting between said annular neck (29) and said annular edge (27) prevents the ferrule (25) from being detached from the fastening element (11).

5. Fastening element according to claim 4, wherein said annular edge (27) is defined in a plane perpendicular to the longitudinal axis ("S") of the cylindrical body (13).

6. Fastening element according to any of the preceding claims, wherein said engaging portion (15) comprise recesses (41) for an adhesive that, once hardened, is capable of holding the cap (23) firmly attached to the engaging portion (15).

7. Fastening element according to claim 6, wherein said engaging portion (15) comprises a plurality of faces (15 a) on which the recesses (41) are provided.

8. Fastening element according to claim 7, wherein said recesses (41) comprise recesses having a rectangular or circular or oval cross-section.

9. Fastening element according to claim 7, wherein said recesses (41) comprise grooves.

10. Fastening element according to claim 7 or 8, wherein said recesses (41) comprise straight and/or curved sides.
